(19) **Europäisches Patentamt**
**European Patent Office**
**Office européen des brevets**

(11) **EP 2 747 416 A2**

(12) # EUROPEAN PATENT APPLICATION

(43) Date of publication:
**25.06.2014 Bulletin 2014/26**

(51) Int Cl.:
*H04N 5/232* (2006.01)    *H04N 5/353* (2011.01)

(21) Application number: **13198064.1**

(22) Date of filing: **18.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.12.2012 EP 12306614**

(71) Applicant: **ST-Ericsson SA**
**1228 Plan-les-Ouates (CH)**

(72) Inventors:
• **Auberger, Stéphane**
**93160 NOISY LE GRAND (FR)**
• **ALIBAY, Manu**
**75020 PARIS (FR)**

(74) Representative: **Cabinet Plasseraud**
**52, rue de la Victoire**
**75440 Paris Cedex 09 (FR)**

(54) **Rolling shutter wobble detection and correction**

(57)     This invention generally relates to the detection and correction of rolling shutter artefacts in video sequences.

The proposed solution determines wobble line detector(s) in order to detect and correct rolling shutter wobble in a video sequence. It is taken advantage of the fact that the analysis of the motion vector field or the homography transformation can help detecting rolling shutter wobble in a video sequence. This way the proposed apparatus is able to provide a simple mechanism to detect wobble and to provide the relevant distortion correction processing. Indeed, it is thus possible to enable wobble correction only when wobble has been detected. In the proposed solution, correction depends on the detected wobble line(s).

FIG. 1

EP 2 747 416 A2

**Description**

Field of the Invention

This invention generally relates to detection of rolling shutter artefacts in video sequences. It finds applications, in particular, in algorithms used in Integrated Circuits (IC) for user devices having a capacity of handling, i.e., acquiring, processing and/or playing videos, such as Digital Still Camera (DSC), mobile and portable device's camera, digital camcorder, etc.

Background of the Invention

There is a growing need for image sensors due to the increasing demand for video cameras, for example, in consumer electronics (e.g., smartphones, tablets). Nowadays, complementary metal-oxide semiconductor (CMOS) technology is widely used because CMOS sensors provide low-cost and low-power solutions for various applications along with the ability to integrate with image processing circuits. However, most CMOS sensors adopt rolling shutter wherein detector rows are read and reset sequentially, thus making the capture time of each row slightly after the capture time of the previous row. This contrasts with global shutter wherein all rows are acquired during the same capture time. The use of rolling shutter causes problems when the scene changes in a time which is less than that taken to expose the entire image because some rows may have newer information than others. Indeed, when camera or objects moves during image capture, the scene imaged by each row presents relative motion, resulting in geometric distortion in the acquired image called rolling shutter distortion. A special type of rolling shutter distortion is called "wobble" (also known as "jello effect") and is mainly due to variation of the direction of motion during image capture, especially at high speed. For instance, wobble is particularly pronounced for cameras mounted on helicopters, cars and motorbikes. Rolling shutter wobble are often largely imperceptible in single images. However, over a plurality of images such undesirable distortion seriously degrades the visual quality of the acquired images. Indeed, it is often said that wobble has an effect similar to looking at a video sequence through an aquarium. The artefact of rolling shutter wobble may be corrected by means of image processing by using a temporal super-resolution process to infer the high frequency motion of the camera from low-frequency optical flow. Examples of such methods may be found in "Removing Rolling-shutter Wobble", Simon Baker, Eric Bennett, Sing Bing Kang, and Richard Szeliski, Microsoft Research, Technical Report, MSR-TR-2010-28, March 2010. However, such methods are not able to detect whether wobble is within a given video sequence. Therefore, unappropriated wobble correction may be applied to a video sequence even where wobble is not present, thus leading to unwarranted waste of resources and processing. It would thus be advantageous to provide a mechanism to detect and correct wobble in a video sequence.

Summary of the Invention

The present subject application provides an apparatus and a method of detecting and correcting wobble in a video sequence comprising a plurality of pixel-based images acquired via a rolling-shutter mode of image capture as described in the accompanying claims. Specific embodiments of the subject application are set forth in the dependent claims.
Certain embodiments of the subject application include an apparatus for detecting wobble in a video sequence comprising a plurality of pixel-based images acquired via a rolling-shutter mode of image capture. The apparatus comprises an image motion estimation unit configured to receive at least a previous image PREV and a current image CURR of the plurality of images. The image motion estimation unit is also configured to obtain one motion vector field of the current image by performing motion estimation based on the previous image and the current image. The motion vector field has row lines and columns lines and comprises motion vectors of respective regions of the current image. Each region is associated with one row line and one column line. Each motion vector comprises an horizontal component indicative of the horizontal amount of motion of a respective region between the previous image and the current image. Also each motion vector comprises a vertical component indicative of the vertical amount of motion of the respective region between the previous image and the current image. The apparatus further comprises a wobble row line detection unit coupled to the image motion estimation unit. The wobble row line detection unit is configured to determine for each row line of the motion vector field, in a first predefined order, a first information indicative of an aggregation of horizontal components. The wobble row line detection unit is further configured to determine for each row line of the motion vector field, in a second predefined order, a second information indicative of an aggregation of vertical components. Furthermore, the wobble row line detection unit determines, according to the first predefined order, an horizontal wobble row line indicative of the row line of the motion vector field where a change of polarity of the first information is detected. Finally, the wobble row line detection unit determines, according to the second predefined order, a vertical wobble row line indicative of the row line of the motion vector field where a change of polarity of the second information is detected. The wobble lines show a change of polarity of the motion field (vertically or horizontally, depending of the motion type), that reflects the fact that the camera motion has changed direction during the image acquisition.

In embodiments of the subject application it is further included a device comprising the apparatus of the proposed application along with a display unit coupled to the apparatus. The display unit is configured to display at least a corrected current image.

In certain embodiments of the subject application, it is included a method of detecting wobble in a video sequence comprising a plurality of pixel-based images acquired via a rolling-shutter mode of image capture. The method comprises the step of receiving at least a previous image PREV and a current image CURR of the plurality of images. The method further comprises the step of obtaining one motion vector field of the current image by performing motion estimation based on the previous image and the current image. The motion vector field has row lines and columns lines and comprises motion vectors of respective regions of the current image. Each region is associated with one row line and one column line. Each motion vector comprises an horizontal component indicative of the horizontal amount of motion of a respective region between the previous image and the current image. Also each motion vector comprises a vertical component indicative of the vertical amount of motion of the respective region between the previous image and the current image. The method further comprises the step of determining for each row line of the motion vector field, in a first predefined order, a first information indicative of an aggregation of horizontal components. The method further comprises the step of determining for each row line of the motion vector field, in a second predefined order, a second information indicative of an aggregation of vertical components. Furthermore, the method further comprises the step of determining, according to the first predefined order, an horizontal wobble row line indicative of the row line of the motion vector field where a change of polarity of the first information is detected. Finally, the method further comprises the step of determining, according to the second predefined order, a vertical wobble row line indicative of the row line of the motion vector field where a change of polarity of the second information is detected.

Certain embodiments of the subject application also include a non-transitory computer readable medium having stored thereon instructions for causing one or more processing units to execute the method of the subject application.

These and other aspects of the subject application will be apparent from an elucidated with reference to the embodiments described hereinafter.

Brief Description of the Drawings

Further details, aspects and embodiments of the proposed solution will be described, by way of example only, with reference to the drawings. In the drawings, like reference numbers are used to identify like or functionally similar elements. Elements in the figures are illustrated for simplicity and clarity and have not necessarily been drawn to scale.

FIG. 1 is a schematic block diagram of an apparatus for detecting rolling shutter wobble in accordance with the subject application.

FIG. 2 is a schematic diagram of a motion vector field in accordance with the subject application.

FIG. 3 is a schematic diagram of a motion vector in accordance with the subject application.

FIG. 4 is a schematic diagram showing an horizontal wobble line in accordance with the motion vector field of FIG. 2.

FIG. 5 is a schematic diagram showing a vertical wobble line in accordance with the motion vector field of FIG. 2.

FIG. 6 is a schematic diagram sowing an exemplary decomposition of the motion vector field of FIG. 5 in accordance with an exemplary homography transformation.

FIG. 7 is a schematic flow diagram of a method according to an embodiment of the subject application.

Detailed Description of the preferred embodiments

Because the illustrated embodiments of the subject application may for the most part, be composed of mechanisms, electronic components and circuits known to those skilled in the art, details will not be explained in any greater extent than that considered necessary for the understanding and appreciation of the underlying concepts of the subject application, in order not to obfuscate or distract from the teachings of the subject application.

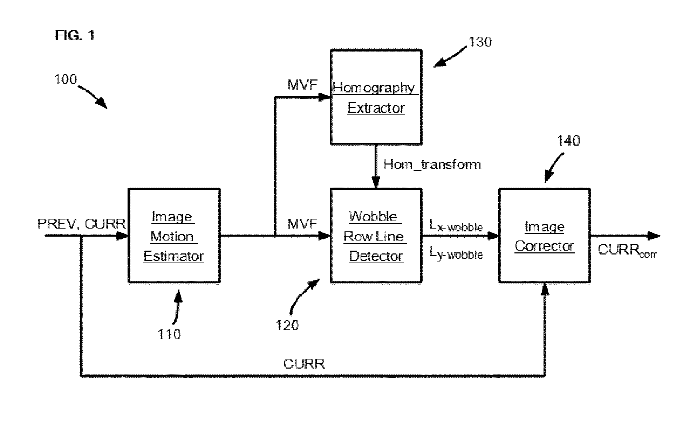

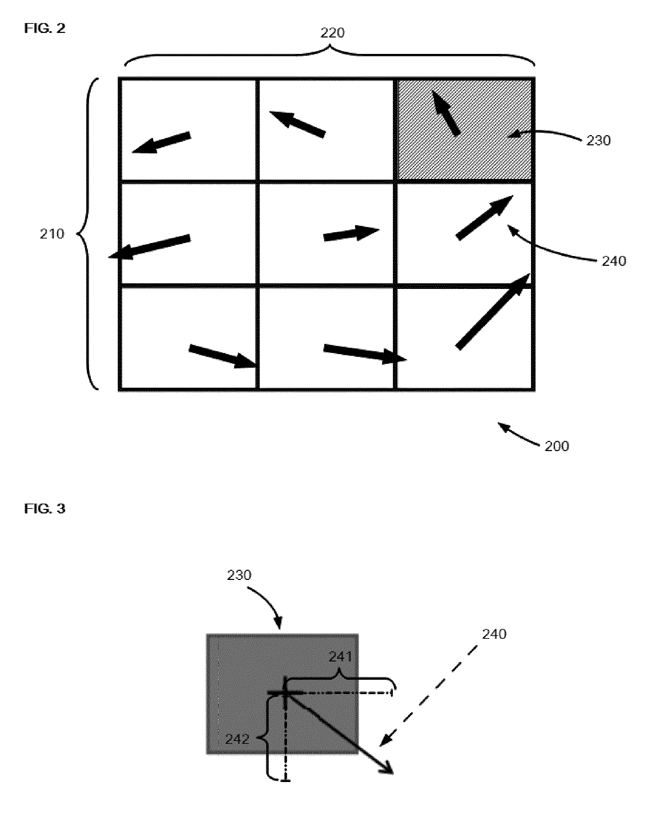

Hereinafter, FIGs. 2-6 will be described altogether with reference to FIG. 1.

Referring to FIG. 1, there is diagrammatically shown therein a schematic block diagram of an apparatus 100 for detecting rolling shutter wobble in accordance with the subject application. The apparatus 100 of FIG. 1 as shown comprises:

- an image motion estimation unit 110;
- a wobble row line detection unit 120 coupled to the image motion estimation unit 110; and,
- an image correction unit 140 coupled to the wobble row line detection unit 120.

In the example of FIG. 1 as shown, the image motion estimation unit 110 is configured to receive at least a previous image PREV and a current image CURR of a plurality of images. The plurality of images may have been acquired via a rolling-shutter mode of image capture. For instance, the plurality of images may be acquired by a metal oxide semiconductor-based (CMOS) image sensor coupled to the image motion estimation unit 110 and the image correction unit 140. The image motion estimation unit 110 is further configured to obtain one motion vector field MVF, 200 of the current image CURR by performing motion estimation based on the previous image PREV and the current image CURR. The motion vector field MVF, 200 has row lines 210 and columns lines 220 and comprises motion vectors 240 of respective regions 230 of the current image CURR. In an example, motion estimation may be block-based by comparing blocks of the current image CURR against similar blocks in the previous image PREV. In that case, the current image CURR may be initially divided into multiple regions or blocks (e.g., 8x8 pixel blocks or 16x16 pixel blocks). Each of the regions (e.g., blocks 230) is associated with one row line 210 and one column line 220 of the motion vector field MVF, 200 and may have an associated motion vector 240 as illustrated in FIGs. 2-3. Each motion vector 240 comprises:

- an horizontal component 241 indicative of the horizontal amount of motion of a respective region 230 between the previous image PREV and the current image CURR; and,
- a vertical component 242 indicative of the vertical amount of motion of the respective region between 230 the previous image PREV and the current image CURR.

However, the subject application is not limited to block-based motion estimation and others motion estimation techniques, even those not providing a regular grid of motion vectors, may be used as well. In other words the proposed solution may be embodied with various method of motion estimation. Indeed, at least part of the contribution of the proposed solution to the art of rolling shutter wobble detection does not rely on the motion estimation per se since one of the objective of the subject application is to use at least only the motion vector field MVF, 200, or an image transformation of the motion vector field MVF, 200in order to detect the presence of wobble in a video sequence.

Referring back to FIG. 1, the wobble row line detection unit 120 as shown is configured to determine for each row line 210 of the motion vector field MVF, 200, in a first predefined order, a first information indicative of an aggregation of horizontal components 241. The wobble row line detection unit 120 is further configured to determine for each row line 210 of the motion vector field MVF, 200, in a second predefined order, a second information indicative of an aggregation of vertical components 242. The first and second information may, respectively, be aggregated in a variety of different ways depending on the implementation requirements or needs. For instance, in one embodiment the first and second information are, respectively, an average of the horizontal or vertical components 241, 242. For example, where a motion vector field MVF, 200, has 3 row lines and 3 columns row lines there will be determined 3 first information and 3 second information (i.e. one first and second information per row line of the motion vector field MVF, 200). In other embodiments, the first and second information may indicate a maximum or minimum horizontal or vertical component 241, 242. In an example, the first and second predefined orders are, respectively, one of ascending and a descending row line order.

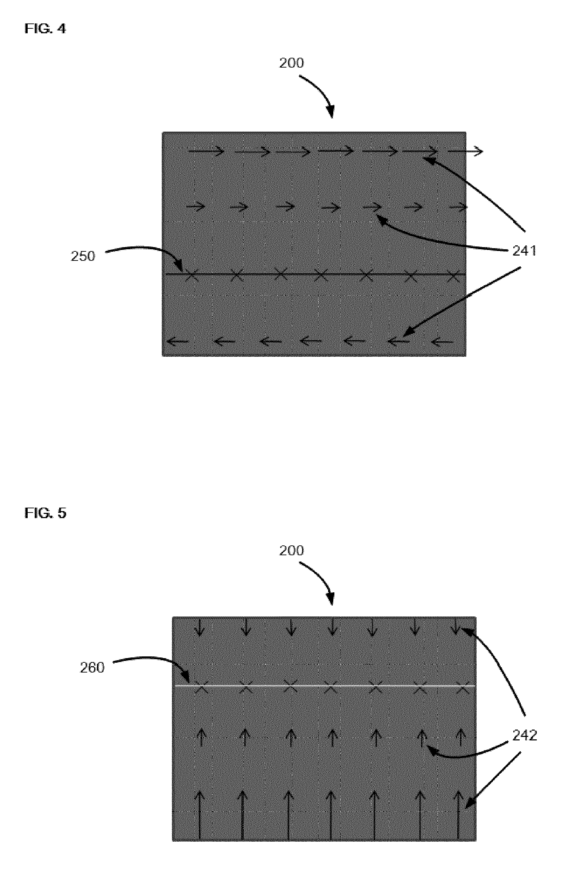

In FIG. 1 in conjunction with FIG. 4, the wobble row line detection unit 120 is further configured to determine, according to the first predefined order, an horizontal wobble row line 250 indicative of the row line of the motion vector field where a change of polarity horizontal motion direction is detected. Indeed, while looking at FIG. 4, it can be seen in the upper part of the motion vector field MVF, 200, that the horizontal components 241 of the motion vectors 240 are mainly pointing towards the right, thus indicating that an horizontal motion occurred from left to right between the image captures of the previous image PREV and the current image CURR. On the other hand, it can also be seen in the lower part of the motion vector field MVF, 200, that the horizontal components 241 of the motion vectors 240 are mainly pointing towards the left, thus indicating that an horizontal motion occurred from right to left between the image captures of the previous image PREV and the current image CURR. Then by vertically scanning the horizontal components 241 of the motion vectors 240, it appears that at row line 250, the direction of the horizontal components is changed, and such row line is called the horizontal wobble row line 250 in the proposed solution. In an example, where the first information is a numerical value, the horizontal wobble row line 250 is the row line of the motion vector field MVF, 200, where a change of the sign of the first information is detected.

In FIG. 1 in conjunction with FIG. 5, the wobble row line detection unit 120 is further configured to determine, according to the second predefined order, a vertical wobble row line 260 indicative of the row line of the motion vector field where a polarity change of vertical motion direction is detected. Indeed, while looking at FIG. 5, it can be seen in the upper part of the motion vector field MVF, 200, that the vertical components 242 of the motion vectors 240 are mainly pointing towards the bottom, thus indicating that a vertical motion occurred from top to bottom between the image captures of the previous image PREV and the current image CURR. On the other hand, it can also be seen in the lower part of the motion vector field MVF, 200, that the vertical components 242 of the motion vectors 240 are mainly pointing towards the top, thus indicating that a vertical motion occurred from bottom to top between the image captures of the previous image PREV and the current image CURR. Then by vertically scanning the vertical components 242 of the motion vectors 240, it appears that at row line 260, the direction of the vertical components is changed, and such row line is called the vertical wobble row line 260 in the proposed solution. In an example, where the second information is a numerical value, the vertical wobble row line 260 is the row line of the motion vector field MVF, 200, where a change of the sign of the second information is detected.

To summarise, with the proposed solution it is considered that rolling shutter wobble is present in a video sequence where the vertical wobble row line 250 and/or the horizontal wobble row line 260 is (are) detected. Such solution is quite convenient since it is only based on the motion vector field, MVF, 200. Consequently, the proposed solution makes it easy to trigger rolling shutter wobble correction, since corresponding correction module would be activated only when the vertical wobble row line 250 and/or the horizontal wobble row line 260 is (are) detected and not otherwise, thus saving valuable processing and resources.

In another variant of embodiment different from the foregoing embodiments, the determination of the vertical wobble row line 260 and the vertical wobble row line 260 is not directly obtained based on the information comprised in the motion vector field MVF, 200. Indeed, in this variant of embodiment, the determination of the vertical wobble row line 260 and the vertical wobble row line 260 is obtained based on the information comprised in an image transformation such as an homography transformation Hom_transform, calculated from the motion vector field MVF, 200. Therefore, referring back to FIG. 1, the apparatus 100 further comprises an homography extraction unit 130 coupled to the image motion estimation unit 110 and the wobble row line detection unit 120. In FIG. 1, the homography extraction unit 130 as shown is configured to obtain an homography transformation Hom_transform of the motion vector field MVF, 200 according to a motion homography model. The homography transformation Hom_transform is usually a matrix which models globally the motions that exist between a first image and a second image such as the previous image PREV and the current image CURR. Thus, it is possible to determine the new position of point of the previous image PREV in the current image CURR, for instance multiplying the former coordinate of the point with the homography transformation Hom_transform. However, having the homography transformation Hom_transform alone is not sufficient and it is needed an interpretation of every coefficient in it. Such interpretation is called the motion homography model. In an example that will be used hereinafter, it is considered the following homography transformation Hom_transform of the motion vector field according to a given motion homography model:

$$\begin{pmatrix} Zx * \cos\theta & Sx & Tx \\ -\sin\theta & Zy * \cos\theta & Ty \\ 0 & 0 & 1 \end{pmatrix}$$

wherein:

- $Zx$ describes the horizontal zoom,
- $Zy$ describes the vertical stretch,
- $Tx$ describes the horizontal translation,
- $Ty$ describes the vertical translation
- $Sx$ describes the horizontal bending factor, and
- $\theta$ describes the angle of rotation in plane.

In this example, $Zx$ may be considered as the true user zoom, as it is not usually affected by the rolling shutter distortion (contrary to $Zy$) . Also, $Sx$ may be treated without considering rotation since it is usually very affected by the rolling shutter distortion. In the exemplary homography transformation Hom_transform the motion homography model is affine. However, non-affine transformation area also contemplated in the proposed solution. Further, the homography extraction unit 130 is also configured to determine a first row line where vertical bending compensates translation based on the homography transformation, and to determine a second row line where vertical stretch compensates translation based on the homography transformation. In an example, it is not considered the x coordinates in the exemplary homography transformation Hom_transform. Therefore, for instance, it is considered that $Zx= 1$ and $\theta=0$ in the exemplary homography transformation Hom_transform. In that case, the first row line is defined as follows:

$$L_{x-wobble} = -\frac{T_X}{S_X};$$

and,

and the second row line is defined as follows:

$$L_{y-wobble} = \frac{T_Y}{1 - Z_y}.$$

Furthermore, the homography extraction unit 130 is configured to set the first row line as the horizontal wobble row line 250 if the first row line is within the range of the row lines of the motion vector field MVF, 200 and also configured to set the second row line as the vertical wobble row line 260 if the second row line is within the range of the row lines of the motion vector field. Indeed, the computed first and second row lines may give inconsistent values with regards to the number of row lines available in an image under study. In has been found that this inconsistency is indicative of the fact that rolling shutter wobble in the image. For example, where an image having a resolution of 320x240 (i.e., 240 row lines and 320 row columns), if it is found that the first row line is equal to -4, for example, then it can be deducted that there is no horizontal wobble in the image. Also, if it is found that the second row line is equal to 246, for example, then it can be deducted that there is no vertical wobble in the image. In contrast, if it is found that the first and second row lines are within the range of 1 to 240, then it can be deducted that there is horizontal/vertical wobble in the image.

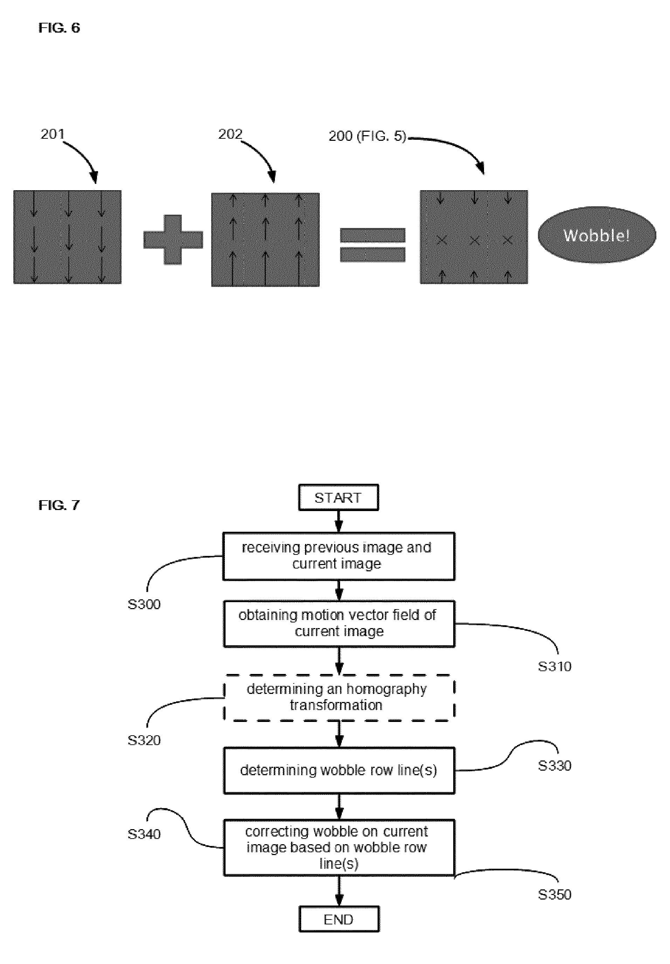

To summarise, with the proposed solution it is considered that rolling shutter wobble is observed in a video sequence where computed first and/or second row lines are within the row line range of the current image CURR under study. When this condition is verified, the first row line is considered as being the vertical wobble row line 250 and second row line is considered as being the vertical wobble row line 260. Computed first and second row lines are thus to be seen as the row lines where motion is cancelled. Such solution is quite convenient since it is only based on the homography transformation Hom_transform. Consequently, the proposed solution makes it easy to trigger rolling shutter wobble correction, since corresponding correction module would be activated only when the vertical wobble row line 250 and/or the horizontal wobble row line 260 is (are) detected and not otherwise, thus providing proper distortion processing. Indeed, the way to provide a distortion correction to the images comprising wobble wherein wobble is modelled as a combination of translation and stretch (e.g. as described in figure 6) would generally lead to false rectifications. In contrast, in the proposed solution wobble is modelled as a combination of two stretches around a wobble line which more appropriately provide relevant rectification to images comprising wobble.

Further in FIG. 1, the image correction unit 140 is configured to receive the current image CURR and to correct the rolling shutter wobble in the current image CURR based on the vertical and horizontal wobble row lines 250, 260. It has been found that translation in the homography transformation Hom_transform is not a global shift of the image subject to wobble like a regular translation would be. Therefore translation displacement may not be corrected as a usual translation. Indeed, wobble usually occurs in a frame where the motion is changed during the capture of the image, and therefore a translation correction would be a false correction. Instead of a translation correction, it has been found that the correction of translation displacement may be as if stretch as occurred in the image but not from a top or bottom origin of the image. Indeed, it has been found that the origin of the stretch could be an horizontal/vertical wobble line. This is exemplified in FIG. 6 wherein it is shown a decomposition of the motion vector field 200 of FIG. 5 based on the exemplary homography transformation Hom_transform. In FIG. 6, it is shown therein where a motion vector field MVF, 200 is modelled by the exemplary homography transformation Hom_transform as a combination of two transformations:

- a constant translation pointing towards the bottom (201); and,
- a stretch towards to top (202) (known also as top-based compression or compression).

Hence, for instance, based on the foregoing, the image correction unit 140 may be further configured to reduce the wobble in a pixel-based image based on backward mapping formulas encompassing translation, rotation, stretch and wobble corrections. The new modelling of the motion, instead of a combination of translation and stretch, will be one of two stretches in opposite direction, with an origin at the detected wobbling line. The image correction unit 140 may thus apply to each x pixel coordinate of the current image an image correction where motion is considered being a combination of two horizontal stretches in opposite direction with an origin at the first row line such as in the following formula:

$$x * \cos(\theta' * RS\%) + y * \sin(\theta' * RS\%) + Sx * \frac{y - L_{x-wobble}}{height} * RS\%.$$

Also, the image correction unit 140 may thus apply to each y pixel coordinate of the current image an image correction where motion is considered being a combination of two vertical stretches in opposite direction with an origin at the second row line such as in the following formula:

$$\left(1 + \left(\frac{Zy}{Zx} - 1\right) * \frac{y - L_{y-wobble}}{height} * RS\%\right) * y * \cos(\theta' * RS\%) - x * \sin(\theta' * RS\%)$$

wherein:

$$\theta' = \theta * \frac{y - L_{center}}{height},$$

$L_{center}$ is the row line of the center of rotation
$RS\%$ is the amount of rolling shutter distortions generated by the rolling-shutter mode of image capture.

As a fully hardware dependent parameter, $RS\%$ can be deduced only once per sensor. Let's consider the time T which is the time between the capture of two consecutive rows wherein the shorter it is, the closer the result will be to a global shutter type of capture. In this case, $RS\%$ may be defined as:

$$RS\ percentage = \frac{\tau}{Time\ spent\ capturing\ a\ line}$$

As the captures of two consecutive rows have at least a small overlap, this percentage is comprised between 0 and 100%. This percentage can be seen as a measurement of the amount of the RS distortions which is generated by a sensor. In one possible embodiment, deducing the RS percentage of a sensor comes may be based on the global readout time (that is to say the time between the end of the capture of the first row of the frame, and the end of the capture of the last row of the next frame), which is a parameter that is easier to get from a sensor specification. The definition of $RS\%$ may thus reads:

$$RS\ percentage = Global\ readout\ time * Frame\ per\ second$$

One of the main differences between this exemplary correction and the classical correction techniques are the presence of the vertical\horizontal wobble row lines 250, 260, and the absence of the translation correction terms. Thus, is to be noted that if there is only detected a vertical wobble line, then the standard y-correction correction is applied. And if there is only detected an horizontal wobble line, the standard x-correction correction is applied.

In embodiments of the subject application, the apparatus 100 may further comprise a display unit which may be coupled to the apparatus 100 and configured to display at least the corrected current image $CURR_{corr}$.

Referring now to FIG. 7, there is diagrammatically shown therein a flow diagram of a method according to an embodiment of the subject application and with regard to apparatus 100 of FIG. 4.

In S300, it is received at least a previous image and a current image of a plurality of images acquired via a rolling-shutter mode of image capture, as already explained above.

In S310, it is obtained one motion vector field of the current image by performing motion estimation based on the previous image and the current image, as already explained above.

Then, in S320, optionally, it is determined an homography transformation based on the motion vector field, as already explained above.

Later in S330, it is determined the wobble row line(s), as already explained above.

In S340, it is corrected the video sequence based on the wobble row line(s), as already explained above.

Finally, in S350, it is applied to the current image, the rolling-shutter correction parameter and the video stabilisation correction parameter.

It is also claimed a non-transitory computer readable medium having stored thereon instructions for causing one or more processing units to execute the method according to FIG. 7 or the operations of apparatus 100 as illustrated in FIG. 1.

The skilled person would appreciate that the proposed solution takes advantage of the fact that the analysis of the motion vector field or the homography transformation can help detecting rolling shutter wobble in a video sequence. In other words, advantages of the subject application include the following:

- a simple mechanism to detect wobble lines in an image;
- a proper way to provide a correction of images comprising wobble.

Of course, the above advantages are exemplary, and these or other advantages may be achieved by the proposed solution. Further, the skilled person will appreciate that not all advantages stated above are necessarily achieved by embodiments described herein.

Any arrangement of devices to achieve the same functionality is effectively "associated" such that the desired functionality is achieved. For example, the homography extraction unit may be combined in a single unit with the wobble row line detector. Hence, any two devices herein combined to achieve a particular functionality may be seen as "associated with" each other such that the desired functionality is achieved, irrespective of architectures or intermediate devices. Likewise, any two devices so associated can also be viewed as being "operably connected," or "operably coupled," to each other to achieve the desired functionality.

Furthermore, those skilled in the art will recognize that boundaries between the above described operations are merely illustrative. The multiple operations may be combined into a single operation, a single operation may be distributed in additional operations and operations may be executed at least partially overlapping in time. Moreover, alternative embodiments may include multiple examples of a particular operation, and the order of operations may be altered in various other embodiments.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or operations then those listed in a claim. Furthermore, the terms "a" or "an," as used herein, are defined as one or as more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage. The subject application scope is defined in the following claims and the equivalents thereto. Furthermore, reference signs used in the description and claims do not limit the scope of the subject application as claimed.

The principles of various embodiments of the invention can be implemented as hardware, firmware, software or any combination thereof. Moreover, the software is preferably implemented as an application program tangibly embodied on a program storage unit, a non-transitory computer readable medium, or a non-transitory machine-readable storage medium that can be in a form of a digital circuit, an analogy circuit, a magnetic medium, or combination thereof. The application program may be uploaded to, and executed by, a machine comprising any suitable architecture. Preferably, the machine is implemented on a computer platform having hardware such as one or more central processing units ("CPUs"), a memory, and input/output interfaces. The computer platform may also include an operating system and microinstruction code. The various processes and functions described herein may be either part of the microinstruction code or part of the application program, or any combination thereof, which may be executed by a CPU, whether or not such computer or processor is explicitly shown. In addition, various other peripheral units may be connected to the computer platform such as an additional data storage unit and a printing unit.

The foregoing detailed description has set forth a few of the many forms that the invention can take. It is intended that the foregoing detailed description be understood as an illustration of selected forms that the invention can take and not as a limitation to the definition of the invention. It is only the claims, including all equivalents that are intended to define the scope of this invention.

**Claims**

1. An apparatus 100 for detecting wobble in a video sequence comprising a plurality of pixel-based images acquired via a rolling-shutter mode of image capture, the apparatus comprising:

   - an image motion estimation unit 110 configured to:

- receive at least a previous image PREV and a current image CURR of the plurality of images; and,
- obtain one motion vector field MVF, 200 of the current image by performing motion estimation based on the previous image and the current image, the motion vector field having row lines 210 and columns lines 220 and comprising motion vectors 240 of respective regions 230 of the current image wherein:
- each region is associated with one row line and one column line; and,
- each motion vector comprises:

- an horizontal component 241 indicative of the horizontal amount of motion of a respective region between the previous image and the current image; and,
- a vertical component 242 indicative of the vertical amount of motion of the respective region between the previous image and the current image; and,

- a wobble row line detection unit coupled to the image motion estimation unit, the wobble row line detection unit being configured to:

- determine for each row line of the motion vector field, in a first predefined order, a first information indicative of an aggregation of horizontal components;
- determine for each row line of the motion vector field, in a second predefined order, a second information indicative of an aggregation of vertical components
- determine, according to the first predefined order, an horizontal wobble row line 250 indicative of the row line of the motion vector field where a change of polarity of the first information is detected;
- determine, according to the second predefined order, a vertical wobble row line 260 indicative of the row line of the motion vector field where a change of polarity of the second information is detected.

2. The apparatus of claim 1, wherein the first and second information are, respectively, one of an average, a maximum and a minimum.

3. The apparatus of any one of claims 1 to 2, wherein the first and second predefined order are, respectively, one of ascending and a descending row line order.

4. The apparatus of any one of claims 1 to 3, further comprising:

- an homography extraction unit 130 coupled to the image motion estimation unit and the wobble row line detection unit, the homography extraction unit being configured to obtain an homography transformation of the motion vector field according to a motion homography model; wherein the wobble row line detection unit is further configured to:
- determine a first row line where vertical bending compensates translation based on the homography transformation;
- determine a second row line where vertical stretch compensates translation based on the homography transformation;
- set the first row line as the horizontal wobble row line if the first row line is within the range of the row lines of the motion vector field; and,
- set the second row line as the vertical wobble row line if the second row line is within the range of the row lines of the motion vector field.

5. The apparatus of claim 4 wherein the motion homography model is a matrix defined as follows:

$$\begin{pmatrix} Zx * cos\theta & Sx & Tx \\ -sin\theta & Zy * cos\theta & Ty \\ 0 & 0 & 1 \end{pmatrix}$$

wherein:

- $Zx$ describes the horizontal zoom,
- $Zy$ describes the vertical stretch,
- $Tx$ describes the horizontal translation,
- $Ty$ describes the vertical translation

- *Sx* describes the horizontal bending factor, and
- $\theta$ describes the angle of rotation.

**6.** The apparatus of claim 5 wherein:

- the first row line is defined as follows:

$$L_{x-wobble} = -\frac{T_X}{S_X};$$

and,
- the second row line is defined as follows:

$$L_{y-wobble} = \frac{T_Y}{1 - Z_y};$$

wherein *Zx* = 1 and $\theta$=0.

**7.** The apparatus of any one of claims 1 to 6 further comprising:

- an image correction unit 140 coupled to the wobble row line detection unit and the image correction being configured to:

- receive the current image; and,
- apply to each x pixel coordinate of the current image, an image correction where motion is considered being a combination of two horizontal stretches in opposite direction with an origin at the first row line;
- apply to each y pixel coordinate of the current image, an image correction where motion is considered being a combination of two vertical stretches in opposite direction with an origin at the second row line.

**8.** The apparatus of claim 7 wherein the image correction unit is configured to:

- apply to each x pixel coordinate of the current image the following formula:

$$x * \cos\left(\theta' * RS\%\right) + y * \sin\left(\theta' * RS\%\right) + Sx * \frac{y - L_{x-wobble}}{height} * RS\%$$

- apply to each y pixel coordinate of the current image the following formula:

$$\left(1 + \left(\frac{Zy}{Zx} - 1\right) * \frac{y - L_{y-wobble}}{height} * RS\%\right) * y * \cos(\theta' * RS\%) - x * \sin(\theta' * RS\%)$$

wherein:

$$\theta' = \theta * \frac{y - L_{center}}{height},$$

$L_{center}$ is the row line of the center of rotation
$RS\%$ is the amount of rolling shutter distortions generated by the rolling-shutter mode of image capture.

9. The apparatus of any one of claims 1 to 8 further comprising a metal oxide semiconductor-based, CMOS, image sensor coupled to the image motion estimation unit and the image correction unit, the CMOS image sensor being configured for capturing the plurality of images.

10. A device comprising:

- the apparatus of claim 9; and,
- a display unit coupled to the apparatus and configured to display at least the corrected current image.

11. A method of detecting wobble in a video sequence comprising a plurality of pixel-based images acquired via a rolling-shutter mode of image capture, the method comprising:

- receiving (S300) at least a previous image and a current image of the plurality of images; and,
- obtaining (S310) one motion vector field of the current image by performing motion estimation based on the previous image and the current image, the motion vector field having row lines and columns lines and comprising motion vectors of respective regions of the current image wherein:
- each region is associated with one row line and one column line; and,
- each motion vector comprises:

- an horizontal component indicative of the horizontal amount of motion of a respective region between the previous image and the current image; and,
- a vertical component indicative of the vertical amount of motion of the respective region between the previous image and the current image; and,

- determining (S320) for each row line of the motion vector field, in a first predefined order, a first information indicative of an aggregation of horizontal components;
- determining (S330) for each row line of the motion vector field, in a second predefined order, a second information indicative of an aggregation of vertical components
- determining (S340), according to the first predefined order, an horizontal wobble row line indicative of the row line of the motion vector field where a change of polarity of the first information is detected;
- determining (S340), according to the second predefined order, a vertical wobble row line indicative of the row line of the motion vector field where a change of polarity of the second information is detected.

12. The method of claim 11, wherein the first and second information are, respectively, one of an average, a maximum and a minimum.

13. The method of any one of claims 11 to 12, wherein the first and second predefined order are, respectively, one of ascending and a descending row line order.

14. The method of any one of claims 11 to 13, further comprising:

- obtaining an homography transformation of the motion vector field according to a motion homography model;
- determining a first row line where vertical bending compensates translation based on the homography transformation;
- determining a second row line where vertical stretch compensates translation based on the homography transformation; and wherein:
- setting the first row line as the horizontal wobble row line if the first row line is within the range of the row lines of the motion vector field; and,
- setting the second row line as the vertical wobble row line if the second row line is within the range of the row lines of the motion vector field..

15. The method of claim 14 wherein the motion homography model is a matrix defined as follows:

$$\begin{pmatrix} Zx * \cos\theta & Sx & Tx \\ -\sin\theta & Zy * \cos\theta & Ty \\ 0 & 0 & 1 \end{pmatrix}$$

wherein:

- $Zx$ describes the horizontal zoom,
- $Zy$ describes the vertical stretch,
- $Tx$ describes the horizontal translation,
- $Ty$ describes the vertical translation
- $Sx$ describes the horizontal bending factor, and
- $\theta$ describes the angle of rotation.

**16.** The method of claim 15 wherein:

- the first row line is defined as follows:

$$L_{x-wobble} = -\frac{T_X}{S_X};$$

and,
- the second row line is defined as follows:

$$L_{y-wobble} = \frac{T_Y}{1 - Z_y};$$

wherein $Zx = 1$ and $\theta = 0$.

**17.** The method of any one of claims 11 to 16 further comprising:

- applying to each x pixel coordinate of the current image, an image correction where motion is considered being a combination of two horizontal stretches in opposite direction with an origin at the first row line;
- applying to each y pixel coordinate of the current image, an image correction where motion is considered being a combination of two vertical stretches in opposite direction with an origin at the second row line.

**18.** The method of any one of claim 17 comprising:

- applying (S350) to each x pixel coordinate of the current image the following formula:

$$x * \cos(\theta' * RS\%) + y * \sin(\theta' * RS\%) + Sx * \frac{y - L_{x-wobble}}{height} * RS\%$$

- applying (S350) to each y pixel coordinate of the current image the following formula:

$$\left(1 + \left(\frac{Zy}{Zx} - 1\right) * \frac{y - L_{y-wobble}}{height} * RS\%\right) * y * \cos(\theta' * RS\%) - x * \sin(\theta' * RS\%)$$

wherein:

$$\theta^{'} = \theta * \frac{y - L_{center}}{height},$$

$L_{center}$ is the row line of the center of rotation
$RS\%$ is the amount of rolling shutter distortions generated by the rolling-shutter mode of image capture.

**19.** A non-transitory computer readable medium having stored thereon instructions for causing one or more processing units to execute the method according to claims 11 to 18.

**FIG. 1**

FIG. 2

FIG. 3

**FIG. 4**

**FIG. 5**

FIG. 6

201          202          200 (FIG. 5)

Wobble!

FIG. 7

START

receiving previous image and
current image

S300

obtaining motion vector field of
current image

S310

determining an homography
transformation

S320

determining wobble row line(s)          S330

S340          correcting wobble on current
image based on wobble row
line(s)

S350

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SIMON BAKER ; ERIC BENNETT ; SING BING KANG ; RICHARD SZELISKI.** Removing Rolling-shutter Wobble. *Microsoft Research, Technical Report,* March 2010